# EUROPÄISCHE PATENTANMELDUNG

(11) **EP 2 511 044 A2**
(43) Veröffentlichungstag der Anmeldung: **17.10.2012**
(21) Anmeldenummer: 12001811.4
(22) Anmeldetag: 16.03.2012
(51) Int. Cl.: B23Q 7/10

(54) **Fertigungssystem**

(30) Priorität: 11.04.2011 DE 102011016713
(71) Anmelder: LIEBHERR-VERZAHNTECHNIK GmbH, 87437 Kempten (DE)
(72) Erfinder: Mattern, Thomas, 87669 Rieden (DE); Guggemos, Herbert, 87496 Untrasried (DE); Zolitsch, Markus, 87490 Haldenwang (DE)
(74) Vertreter: Laufhütte, Dieter

(57) **Zusammenfassung**

Die Erfindung betrifft ein Fertigungssystem mit wenigstens einer Werkzeugmaschine (50,60) und mindestens einem Palettenhandhabungssystem zur automatischen Beladung wenigstens einer Werkzeugmaschine mit Werkstücken, wobei wenigstens ein Palettenhandhabungssystem eine mindestens einer Werkzeugmaschine zugeordnete Speichereinheit mit ein oder mehreren Regalmodulen aufweist, wobei die Speichereinheit zusätzlich wenigstens einen drehbaren Turmspeicher (40) umfasst.

## Beschreibung

Die Erfindung betrifft ein Fertigungssystem mit wenigstens einer Werkzeugmaschine und mindestens einem Palettenhandhabungssystem zur automatischen Beladung wenigstens einer Werkzeugmaschine mit Werkstücken, wobei wenigstens ein Palettenhandhabungssystem eine mindestens einer Werkzeugmaschine zugeordnete Speichereinheit aufweist, die ein oder mehrere Regalmodule umfasst,

Palettenhandhabungssysteme oder -handhabungseinrichtungen bezeichnen in der Automatisierungstechnik Systeme zur Bewältigung des Materialflusses von oder zu einer Wirkstelle. Insbesondere sind Mittel zur Zwischenlagerung der Werkstücke sowie Handhabungsgeräte zur automatischen Beladung einer Bearbeitungsmaschine mit Werkstücken vorgesehen, was einen mannarmen Bearbeitungsprozess ermöglicht. Rohmaterial als auch bearbeitete Werkstücke können bis zur manuellen Entnahme zwischengelagert werden, die Beladung der Werkzeugmaschine erfolgt automatisiert nach einem einprogrammierten Steuerungsablauf. Das vollständige System aus Werkzeugmaschine und Palettenhandhabungssystem wird als Fertigungssystem bezeichnet.

Zur Lagerung/Speicherung der Werkstücke werden entsprechende Speichereinheiten modular aus Regalen mit jeweils ein oder mehreren Ebenen aufgebaut. Innerhalb der Regalmodule lassen sich Werkstücke unmittelbar oder über Paletten einlagern. Die Speicherkapazität bestimmt maßgeblich die zeitliche Dauer des vollautomatisierten Produktionszyklus bis zum nächsten erforderlichen manuellen Eingriff. Die räumliche Ausbreitung der Speichereinheit wird allerdings durch den Arbeitsbereich der technischen Mittel zur Beladung der Werkzeugmaschine aus der Speichereinheit begrenzt. Ein automatischer Zugriff der Werkzeugmaschine auf sämtliche Speicherplätze muss im Sinne einer Vollautomatisierung stets gewährleistet werden. Daher muss der Arbeitsbereich dieser Handhabungsgeräte zur automatischen Bestückung der Werkzeugmaschine bei der Dimensionierung der Speichereinheit Berücksichtigung finden.

Bis zur Fertigstellung der Werkstücke sind regelmäßig mehrere aufeinanderfolgende Arbeitsprozesse notwendig, die den Einsatz mehrerer aufgabenspezifischer Werkzeugmaschinen notwendig machen. Der Automatisierungsgrad erstreckt sich dabei regelmäßig auf einen Bearbeitungsprozeß, das heißt auf eine bestimmte Werkzeugmaschine mit der entsprechenden zugeordneten Speichereinheit. Eine übergreifende Automatisierung, das heißt die Verkettung der Speichereinheiten bzw. der Werkzeugmaschinen, ist bisher äußerst komplex und aufwendig.

Die Aufgabe der vorliegenden Erfindung besteht nun darin, ein Fertigungssystem aufzuzeigen, das die voranstehend beschriebenen Nachteile überwindet.

Diese Aufgabe wird durch ein Fertigungssystem mit den Merkmalen des Anspruchs 1 gelöst. Das erfindungsgemäße Fertigungssystem umfasst wenigstens eine Werkzeugmaschine sowie mindestens ein Palettenhandhabungssystem, das zur automatischen Beladung wenigstens einer Werkzeugmaschine mit Werkstücken dient. Hierzu ist wenigstens eine der Werkzeugmaschine zugeordnete Speichereinheit vorgesehen, die ein oder mehrere Regalmodule umfasst. Zur Erhöhung der Speicherkapazität umfasst die Speichereinheit zusätzlich wenigstens einen drehbaren Turmspeicher.

Der Turmspeicher ist vorzugsweise durch eine oder mehrere kreisrunde Ebenen gekennzeichnet, die jeweils ein oder mehrere Speicherplätze bieten und durch Verdrehen des Turmspeichers bzw. einzelner Ebenen in den Arbeitsbereich der Werkzeugmaschine bringbar sind. Möglich ist es auch, dass der Turmspeicher eine Drehscheibe mit mindestens zwei darauf angeordneten Regalmodulen umfasst, wobei aufgrund der Rotationsbewegung der Drehscheibe um ihre Drehachse wenigstens ein Regalmodul in den Arbeitsbereich der Werkzeugmaschine bringbar ist. Die Integration des Turmspeichers ermöglicht eine effektivere Nutzung des zur Verfügung stehenden Flächenangebotes zum Aufbau der Speichereinheit. Trotz des geringen Flächenbedarfs des Turmspeichers lässt sich das resultierende Speichervolumen deutlich erweitern.

Vorzugsweise sind mehrere Regalmodule der Speichereinheit sowie der wenigstens eine drehbare Turmspeicher in Rundbauweise um den Zugangsbereich der zugeordneten Werkzeugmaschine angeordnet. Die Rundbauweise optimiert die mittlere Distanz zwischen den Speicherplätzen und der Werkzeugmaschine, wobei das verfügbare Platzangebot zur Aufstellung der Regalmodule sowie der Turmspeicher optimal ausgenutzt wird. Aufgrund der Eigensteifigkeit der Regale kann durch die Rundbauweise eine bodenseitige Verdübelung der Regale überflüssig sein.

Zum Zugriff auf die einzelnen Speicherplätze der Regalmodule/Turmspeicher ist wenigstens ein Liftmodul vorgesehen. Vorzugsweise hat das Liftmodul auf alle Speicherplätze der verfügbaren Speichereinheit Zugriff und kann die gespeicherten Werkstücke zur nachfolgenden Bestückung der Werkzeugmaschine aufnehmen. Vorteilhafterweise ist das Liftmodul bei der Anordnung der Speichereinheit in Rundbauweise im oder unmittelbar am Mittelpunkt der Kreisanordnung angeordnet.

Denkbar ist auch eine exzentrische Anordnung des Liftmoduls. Insbesondere umfasst das Liftmodul eine Drehscheibe, auf der ein Trägerrahmen exzentrisch angeordnet ist. Der Trägerrahmen umfasst bevorzugt die notwendigen Mittel für den Zugriff auf die Speichereinheit bzw. die Werkzeugmaschine. Durch die exzentrische Anordnung des Liftmoduls bzw. des Trägerrahmens wird dessen mögliche Reichweite vergrößert. Damit wird die Anzahl der erreichbaren Speicherplätze erhöht, wodurch die mögliche Lagerkapazität ansteigt.

Weiterhin kann es vorgesehen sein, dass das Liftmodul bzw. der Trägerrahmen in Teleskopausführung ausgeführt ist. Insbesondere kann die Ausführung des Liftmoduls bzw. des Trägerrahmens als Teleskopmodul die mögliche Reichweite weiter erhöhen. Dies ist vor allem bei der Direktbeladung von Maschinentischen einer Werkzeugmaschine durch das Liftmodul von Vorteil.

Weiterhin umfasst das Fertigungssystem wenigstens ein Palettenhandhabungssystem, das vorzugsweise wenigstens ein Rüstmodul aufweist, das den externen Systemzugriff auf das Fertigungs- bzw. Palettenhandhabungssystem, beispielsweise zur Entnahme oder Zuführung der Paletten bzw. einzelner Werkstücke, erlaubt.

Die erfindungsgemäße Integration wenigstens eines Turmspeichers hat neben dem erweiterten Speicherplatzvolumen noch einen weiteren vorteilhaften Aspekt. In einer besonders vorteilhaften Ausführung der vorliegenden Erfindung umfasst das Fertigungssystem mindestens zwei Palettenhandhabungssystem sowie mindestens zwei Werkzeugmaschinen, denen jeweils wenigstens eine Speichereinheit eines Palettenhandhabungssystems zugeordnet ist. Die Speichereinheiten können zweckmäßig gemäß einer der voranstehend vorteilhaften Ausführungen aufgebaut sein. Besonders vorteilhaft ist es nun, wenn wenigstens ein Turmspeicher derart angeordnet ist, so dass die wenigstens zwei den beiden Werkzeugmaschinen zugeordneten Speichereinheiten miteinander verkettet sind. Aufgrund der drehbaren Ausführung des Turmspeichers bzw. einzelner Ebenen können ein oder mehrere Speicherplätze des Turmspeichers wahlweise entweder der ersten Speichereinheit bzw. der zweiten Speichereinheit zugewiesen sein. Beispielsweise wird ein Speicherplatz des Turmspeichers durch ein durch die erste Werkzeugmaschine bearbeitetes Werkstück belegt. Durch die drehbare Ausführung des Turmspeichers gelangt das Werkstück in den Bereich der zweiten Speichereinheit, so dass ein Zugriff auf das Werkstück zur Beladung der zweiten Werkzeugmaschine möglich ist.

Die erfindungsgemäße Anordnung bietet eine vergleichsweise unkomplizierte Möglichkeit zur Verkettung zwei oder mehrerer Bearbeitungsprozesse. Durch wenigstens einen Turmspeicher können mindestens zwei oder mehr Speichereinheiten bzw. Werkzeugmaschinen miteinander verkettet werden. Gleichfalls ist es auch möglich, die entsprechenden Verkettungen zwischen zwei oder mehr Werkzeugmaschinen über mehr als einen Turmspeicher herzustellen.

Vorteilhafterweise sind die einzelnen Speichereinheiten der jeweiligen Werkzeugmaschinen jeweils in Rundbauweise ausgeführt, wobei der oder die Schnittpunkte zwischen den Speichereinheit in dem oder den gemeinsamen Turmspeichern liegen.

Die Flexibilität des Palettenhandhabungssystems wird vorzugsweise durch einen modularen Aufbau wenigstens eine Speichereinheit erhöht. Ferner ist eine Erweiterung der einzelnen Module der Speichereinheit nach oben als auch seitlich möglich, indem entweder die Speicherebenenanzahl der verwendeten Regalmodule bzw. Turmspeicher zumindest teilweise erhöht bzw. reduziert oder die Speichereinheit mit wenigstens einem oder mehreren Regalmodulen/Turmspeicher nachgerüstet wird. Auch die Anzahl der Regelmodule auf dem Turmspeicher bzw. auf der Drehscheibe des Turmspeichers kann den Anforderungen angepaßt werden. Grundsätzlich sind jedoch mindestens zwei Regalmodule auf dem Turmspeicher installiert.

Das erfindungsgemäße Fertigungssystem wird vorzugsweise zur automatischen Beladung einer Werkzeugmaschine, eines Bearbeitungszentrums oder einer Verzahnmaschine verwendet. Dabei können die einzelnen Werkstückspeicherplätze der Regalmodule bzw. des Turmspeichers auch ohne Palette genutzt werden, so z. B. für Verzahnmaschinen mit Ringlader.

Die vorliegende Erfindung ist ferner auf ein Palettenhandhabungssystem zum Einsatz in dem erfindungsgemäßen Fertigungssystem nach einem der voranstehenden vorteilhaften Ausführungen gerichtet. Die Vorteile und Eigenschaften des Palettenhandhabungssystems entsprechen offensichtlich denen der voranstehenden vorteilhaften Ausführungen zum erfindungsgemäßen Fertigungssystem, weshalb an dieser Stelle auf eine wiederholende Beschreibung verzichtet werden soll.

Weiterhin betrifft die Erfindung die vorteilhafte Verwendung eines drehbaren Turmspeichers zur Verkettung von mindestens zwei oder mehreren Palettenhandhabungssystemen. Insbesondere sollen zwei oder mehrere Werkzeugmaschinen bzw. deren Speichereinheit verkettet werden. Bezüglich der Vorteile und Eigenschaften der vorteilhaften Verwendung des Turmspeichers sei auf die voranstehenden Ausführungen verwiesen.

Weitere Vorteile und Einzelheiten der Erfindung ergeben sich aus den in den Zeichnungen dargestellten Ausführungsbeispielen. Es zeigen:
- Figur 1:: einen Überblick über die Bestandteile des erfindungsgemäßen Fertigungssystems,
- Figur 2:: ein erstes Ausführungsbeispiel des erfindungsgemäßen Fertigungssystems und
- Figur 3:: ein zweites Ausführungsbeispiel des erfindungsgemäßen Fertigungssystems.

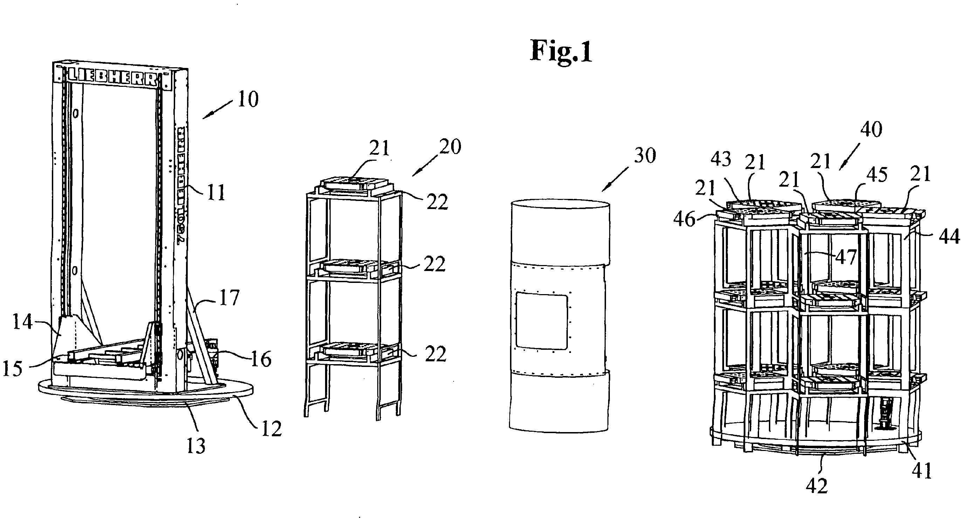

Die Figur 1 gibt einen Überblick über die möglichen Bestandteile eines modular aufgebauten Palettenhandhabungssystems des erfindungsgemäßen Fertigungssystems. Die Figur zeigt von links nach rechts ein Liftmodul 10, ein Regalmodul 20, ein Rüstmodul 30 sowie den Turmspeicher 40. Das Liftmodul 10 umfasst einen Trägerrahmen 11, der fest auf der Drehscheibe 12 angeordnet ist und über die Drehscheibe 12 relativ zur Bodenplatte 13 drehbar gelagert ist. In der dargestellten Ausführung ist der Trägerrahmen 11 exzentrisch auf der Drehscheibe 12 angeordnet, wodurch die Reichweite des Liftmoduls 10 bzw. des Trägerrahmens erweitert wird.

Zur Stabilisierung wird der Trägerrahmen 11 über die Stützelemente 17 gegenüber der Drehscheibe 12 abgestützt. Der Drehantrieb der Drehschreibe 12 ist mit dem Bezugszeichen 16 gekennzeichnet. Innerhalb des Trägerrahmens 11 ist der Fahrschlitten 14 in vertikaler Richtung linear verschiebbar gelagert. Am Fahrschlitten 14 ist zusätzlich der Fahrschlitten 15 befestigt, der horizontal gegenüber dem Schlitten 14 in beide Richtungen verfahrbar ist. Über den Fahrschlitten 14 wird demnach die entsprechende Speicherebene 22 des Regalmoduls 20 bzw. des Turmspeichers 40 angefahren, wobei zur Aufnahme der gelagerten Palette bzw. des Werkstücks der Fahrschlitten 15 verfahren wird.

Weiterhin ist mit dem Bezugszeichen 20 ein mögliches Regalmodul gezeigt, das drei Ebenen 22 zur Aufnahme jeweils einer Speicherpalette 21 aufweist.

Der Turmspeicher 40 umfasst eine Drehscheibe 41, die gegenüber der Bodenplatte 42 um eine vertikal stehende Drehachse drehbar ist. Über die Drehscheibe 41 werden fünf gleichartige Regalmodule 43, 44, 45, 46, 47 aufgenommen, die jeweils drei oder mehr Speicherebenen 22 zur Lagerung der Paletten 21 bzw. Werkstücke umfassen. Grundsätzlich ist die Anzahl der auf der Drehscheibe 41 installierten Regalmodule nicht fest vorgegeben. Zur Gewährleistung der Funktionalität des Turmspeichers 40 sind jedoch mindestens zwei Regalmodule erforderlich.

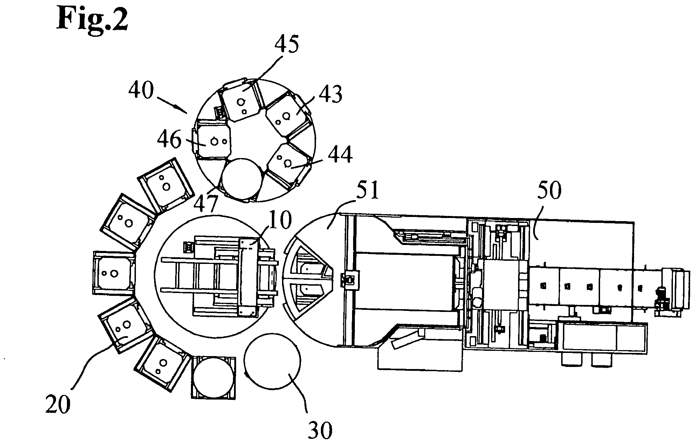

Die Figur 2 zeigt eine mögliche Ausführung des erfindungsgemäßen Fertigungssystems mit einem Palettenhandhabungssystem zur automatischen Beladung der Werkzeugmaschine 50. Die Werkzeugmaschine 50 kann beispielsweise als Verzahnmaschine oder als Bearbeitungszentrum ausgeführt sein. Die einzelnen Regalmodule 20 sind in Rundbauweise um den Beladungszugang 51 der Werkzeugmaschine 50 angeordnet. Im zentralen Mittelpunkt der in Rundbauweise angeordneten Regalmodule 20 befindet sich das Liftmodul 10, das mit Hilfe der in Figur 1 beschriebenen Fahrschlitten 14, 15 Zugriff auf die Speicherebenen der Regalmodule 20 erhält.

Weiterhin ist unmittelbar neben der Werkzeugmaschine 50 das Rüstmodul 30 für den manuellen externen Zugang auf das Palettenhandhabungssystem positioniert.

Die erfindungsgemäße Integration des Turmspeichers 40 vereint eine hohe Speicherkapazität mit verhältnismäßig geringem Flächenbedarf. Die Drehscheibe 41 des Turmspeichers 40 trägt fünf Regalmodule 43, 44, 45, 46, 47, deren einzelne Ebenen über das Liftmodul 10 zugänglich sind. Im Beispiel der Figur 2 können die im Regalmodul 47 gelagerten Paletten 21 bzw. Werkstücke über das Liftmodul 10 entnommen und zur Bestückung der Werkzeugmaschine 50 dieser unmittelbar zugeführt werden. Durch die drehbare Ausführung des Turmspeichers 40 sind alle Speicherplätze über ein einziges Liftmodul 10 erreichbar. Die Speicherkapazität lässt sich demnach ohne aufwendige Modifikation des eingesetzten Liftmoduls 10 erhöhen.

Der modulare Aufbau der Speichereinheit aus den Regalmodulen 20 sowie dem Turmspeicher 40 bietet nicht nur eine einfache Erweiterungsmöglichkeit des Speichervolumens sondern ebenfalls eine gesteigerte Flexibilität des Systems, da die Anzahl der Regalmodule 20 sowie Turmspeicher 40 ohne Beschränkung an die gegebenen Anforderungen anpaßbar ist. Zudem ist eine nachträgliche Erweiterung des Speichervolumens, sowohl nach oben, das heißt durch Erhöhung der jeweiligen Anzahl an Speicherebenen 22 pro Regalmodul 20 bzw. Turmspeicher 40, als auch zur Seite durch Nachrüsten der Speichereinheit mit einem oder mehreren zusätzlichen Regalmodulen 20 bzw. Turmspeichern 40 denkbar.

Die Werkstückspeicherplätze innerhalb der Regalmodule 20 sowie im Turmspeicher 40 lassen sich bei Bedarf auch ohne Palette 21 nutzen, was z. B. bei der Versorgung einer Verzahnmaschine mit Ringlader zweckmäßig ist. Hierzu erhält das Liftmodul 10 optional eine in den Figuren nicht dargestellte Greifereinheit, die eine direkte Aufnahme eines gelagerten Werkstückes über das Liftmodul 10 ermöglicht.

Die Rundbauweise der Regalmodule 20 und des Turmspeichers 40 kann das Verdübeln der Regale 20 im Boden überflüssig machen, da eine gewisse Eigensteifigkeit der Regale 20 anzunehmen ist.

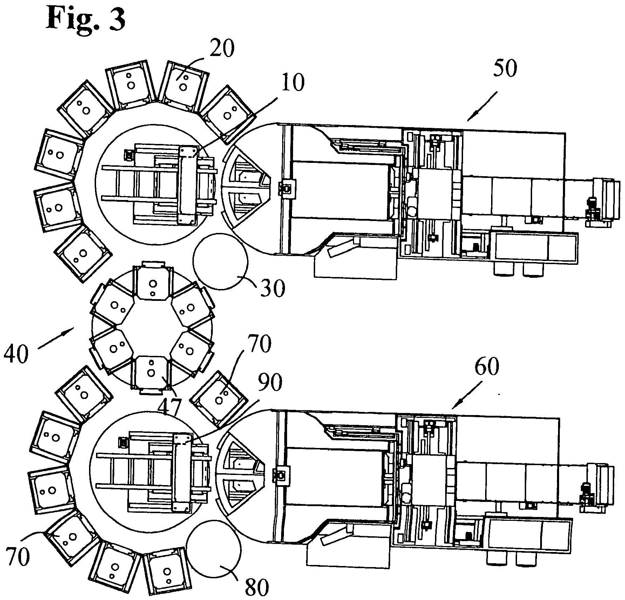

Der Figur 3 ist eine mögliche Ausführung des Fertigungssystems mit zwei Werkzeugmaschinen 50, 60 und zwei Palettenhandhabungssystemen zu entnehmen, das einen maschinenübergreifenden Automatisierungsgrad aufweist. Jeder Werkzeugmaschine 50, 60 ist eine eigene Speichereinheit zugeordnet. Die der Werkzeugmaschine 50 zugeordnete Speichereinheit umfasst sieben in Rundbauweise angeordnete Regalmodule 20, ein Rüstmodul 30 sowie ein im Mittelpunkt der Regalanordnung liegendes Liftmodul 10. Die Speichereinheit, die der Werkzeugmaschine 60 zugeordnet ist, umfasst ebenfalls sieben kreisförmig angeordnete Regalmodule 70, ein Rüstmodul 80 sowie ein im Mittelpunkt stehendes Liftmodul 90.

Zur Verkettung der beiden Speichereinheiten bzw. Werkzeugmaschinen 50, 60 ist der gemeinsame drehbare Turmspeicher 40 vorgesehen, der folglich den Schnittpunkt der beiden Speichereinheiten bildet. Der Zugriff auf den Turmspeicher 40 ist über beide Liftmodule 10, 90 zulässig und möglich. Beispielsweise kann über das Liftmodul 90 ein Speicherplatz des Regalmoduls 47 des Turmspeichers 40 erreicht werden. Die Drehbewegung der Drehscheibe 41 bringt das Regalmodul 47 in den Bereich der der Werkzeugmaschine 50 zugeordneten Speichereinheit. Bei Bedarf kann das von der Werkzeugmaschine 60 verarbeitete Werkstück im Regalmodul 47 dann durch das Liftmodul 10 entnommen werden und der Werkzeugmaschine 50 zugeführt werden.

Zusätzlich oder alternativ kann die Verkettung von zwei oder mehreren Speichereinheiten auch mit Hilfe einer Hub-Schwenkeinheit oder auf Grundlage eines Transportbandes erfolgen, die zwischen den Speichereinheiten angeordnet sind und den gegenseitigen Austausch von Paletten 21 bzw. einzelnen Werkstücken erlauben.

## Patentansprüche

1. Fertigungssystem mit wenigstens einer Werkzeugmaschine und mindestens einem Palettenhandhabungssystem zur automatischen Beladung wenigstens einer Werkzeugmaschine mit Werkstücken, wobei wenigstens ein Palettenhandhabungssystem eine mindestens einer Werkzeugmaschine zugeordnete Speichereinheit aufweist, die ein oder mehrere Regalmodule umfasst,
**dadurch gekennzeichnet,**
**dass** die Speichereinheit zusätzlich wenigstens einen drehbaren Turmspeicher umfasst.

2. Fertigungssystem nach Anspruch 1, **dadurch gekennzeichnet, dass** mehrere Regalmodule der Speichereinheit in Rundbauweise um den Zugangsbereich der zugeordneten Werkzeugmaschine angeordnet sind.

3. Fertigungssystem nach einem der vorhergehenden Ansprüche, **dadurch gekennzeichnet, dass** die zugeordnete Speichereinheit wenigstens ein Liftmodul für die Bestückung wenigstens einer Werkzeugmaschine mit den innerhalb wenigstens eines Regalmoduls/Turmspeichers gespeicherten Werkstücken aufweist.

4. Fertigungssystem nach Anspruch 3, **dadurch gekennzeichnet, dass** das Liftmodul bzw. der Trägerrahmen des Liftmoduls exzentrisch angeordnet ist, um die Reichweite des Liftmoduls/Trägerrahmens zu vergrößern.

5. Fertigungssystem nach einem der Anspruch 3 oder 4, **dadurch gekennzeichnet, dass** das Liftmodul bzw. der Trägerrahmen in Teleskopausführung ausgeführt ist, wodurch die Reichweite des Liftmoduls/Trägerrahmens erhöht und/oder die Direktbeladung des Maschinentisches der Werkzeugmaschine ermöglicht wird.

6. Fertigungssystem nach einem der vorhergehenden Ansprüche, **dadurch gekennzeichnet, dass** die Speichereinheit wenigstens ein Rüstmodul aufweist.

7. Fertigungssystem nach einem der vorhergehenden Ansprüche, **dadurch gekennzeichnet, dass** mindestens zwei Werkzeugmaschinen mit jeweils wenigstens einem Palettenhandhabungssystem vorgesehen sind, wobei jeder Werkzeugmaschine wenigstens eine Speichereinheit zugeordnet ist und wenigstens zwei der zugeordneten Speichereinheiten über wenigstens einen gemeinsamen drehbaren Turmspeicher verkettet sind.

8. Fertigungssystem nach einem der vorhergehenden Ansprüche, **dadurch gekennzeichnet, dass** mindestens zwei Werkzeugmaschinen mit jeweils wenigstens einem Palettenhandhabungssystem vorgesehen sind, wobei jeder Werkzeugmaschine wenigstens eine Speichereinheit zugeordnet ist und wenigstens zwei der zugeordneten Speichereinheiten durch mindestens eine Hub-schwenkeinheit oder mindestens ein Band verkettet sind.

9. Fertigungssystem nach einem der vorhergehenden Ansprüche, **dadurch gekennzeichnet, dass** die Speichereinheiten jeweils in Rundbauweise im Bereich ihrer zugeordneten Werkzeugmaschine angeordnet sind und jeweils zwei Speichereinheiten in Rundbauweise über einen gemeinsamen Turmspeicher verkettet sind.

10. Fertigungssystem nach einem der vorhergehenden Ansprüche, **dadurch gekennzeichnet, dass** wenigstens eine Speichereinheit modular aufgebaut ist, die bedarfsweise nach oben und/oder seitlich erweiterbar ist.

11. Fertigungssystem nach einem der vorhergehenden Ansprüche, **dadurch gekennzeichnet, dass** wenigstens eine Werkzeugmaschine ein Bearbeitungszentrum oder eine Verzahnmaschine ist.

12. Palettenhandhabungssystem für ein Fertigungssystem nach einem der Ansprüche 1 bis 8.

13. Verwendung eines drehbaren Turmspeichers zur Verkettung der Speichereinheiten von zwei oder mehreren Palettenhandhabungssystemen gemäß Anspruch 9.
